# EUROPEAN PATENT APPLICATION

(11) **EP 4 375 351 A1**
(43) Date of publication of application: **29.05.2024**
(21) Application number: 23844520.9
(22) Date of filing: 18.05.2023
(51) Int. Cl.: C10K 3/06, C10K 1/00, C10L 3/10, C10G 35/00, C01B 3/24, B01D 53/047

(54) **METHOD FOR PREPARING CRACKING FURNACE FUEL**

(30) Priority: 13.10.2022 KR 20220131809
(71) Applicant: LG Chem, Ltd., Seoul 07336 (KR)
(72) Inventor: KIM, In Seop, Yuseong-gu Daejeon 34122 (KR); LEE, Sang Beom, Yuseong-gu Daejeon 34122 (KR); SON, Hyun Soo, Yuseong-gu Daejeon 34122 (KR)
(74) Representative: Goddar, Heinz J.
(86) International application number: PCT/KR2023/006796
(87) International publication number: WO 2024/080472

(57) **Abstract**

Provided is a method for preparing fuel of cracking furnace that includes: preparing a first methane off-gas stream derived from a liquid cracking furnace and a second methane off-gas stream derived from a gaseous cracking furnace, diverging a portion of the first methane off-gas stream into a methane off-gas export stream and obtaining a first fuel gas stream from the rest of the stream, obtaining a second fuel gas stream from the second methane off-gas stream, mixing the first and second fuel gas streams to prepare a mixed fuel gas stream, and mixing a hydrogen gas stream with the mixed fuel gas stream.

## Description

### [Technical Field]

### CROSS-REFERENCE TO RELATED APPLICATIONS

The present application claims the benefit of priority to Korean Patent Application No. 10-2022-0131809, filed on October 13, 2022, the entire contents of which are incorporated herein as a part of the specification.

### Technical Field

The present invention relates to a method for preparing fuel of cracking furnace for use in a naphtha cracking facility.

### [Background Art]

Naphtha is a fraction obtained by distilling crude oil and is used as a raw material for producing ethylene, propylene, benzene, and the like which are basic raw materials of petrochemistry by thermal cracking. Manufacture of a product by thermal cracking of naphtha is usually carried out by heating hydrocarbon-based compounds such as naphtha in a cracking furnace to perform thermal cracking, and cooling, compressing, and refining the thermal cracking product.

A conventional thermal cracking process of a hydrocarbon such as naphtha involves a problem of producing a significant amount of carbon dioxide due to the combustion of fuel required for thermal cracking. That is, methane off-gas (MOG) produced in a naphtha cracking process is mainly used as a fuel for a cracking furnace, and since the methane off-gas includes methane as the main component, when the methane off-gas is used as a fuel for a cracking furnace, a large amount of carbon dioxide is emitted. Since the emission of carbon dioxide produced in the thermal cracking process accounts for 90% or more of the emission of carbon dioxide produced in a series of naphtha process related to naphtha, the emission of carbon dioxide produced in a naphtha process needs to be reduced for responding to an environmental regulatory issue which has been recently discussed. As a part thereof, since hydrogen does not produce carbon dioxide emissions during combustion, an attempt is being made to increase hydrogen content in a cracking furnace fuel, that is, to replace a portion of methane off-gas with hydrogen as a cracking furnace fuel.

However, in order to increase hydrogen content in a fuel to a certain level or higher, for example, high-purity hydrogen gas should be purchased from the outside and applied, outside a naphtha cracking furnace facility, and in this case, the economic feasibility of the entire process may be decreased due to the purchase of hydrogen. Therefore, a strategy to include hydrogen as much as possible in a cracking furnace fuel while minimizing the amount of high-purity hydrogen which is further imported from the outside is needed.

Furthermore, since methane off-gas also includes hydrogen and has value as a fuel, a strategy to economically use methane off-gas replaced by hydrogen should be also developed.

### [Disclosure]

### [Technical Problem]

In order to solve the problems mentioned in the Background Art above, an object of the present invention is to provide a method for preparing fuel of cracking furnace which may decrease emission of carbon dioxide during combustion by maintaining a high hydrogen content in the fuel, in the manufacture of a cracking furnace fuel required for a petrochemical process involving thermal cracking. Another object of the present invention is to provide a method for preparing fuel of cracking furnace which may decrease an amount of hydrogen which should be further imported from the outside to promote economic feasibility by efficiently using hydrogen as a byproduct in the process. In addition, generally, methane off-gas (MOG) which is replaced by hydrogen as a cracking furnace fuel is sold or is transferred to a downstream process and used, and still another object of the present invention is to provide a method for preparing fuel of cracking furnace which may minimize hydrogen loss by hydrogen included in the methane off-gas sent out like that.

### [Technical Solution]

In one general aspect, a method for preparing fuel for a cracking furnace includes: preparing a first methane off-gas stream derived from a liquid cracking furnace and a second methane off-gas stream derived from a gaseous cracking furnace, diverging a portion of the first methane off-gas stream into a methane off-gas export stream and obtaining a first fuel gas stream from the rest of the first methane off-gas stream, obtaining a second fuel gas stream from the second methane off-gas stream, mixing the first fuel gas stream and the second fuel gas streams to prepare a mixed fuel gas stream, and mixing a hydrogen gas stream with the mixed fuel gas stream.

### [Advantageous Effects]

When the method for preparing fuel of cracking furnace is used, a hydrogen content of the fuel supplied to a cracking furnace is increased, thereby decreasing an amount of carbon dioxide discharged from the cracking furnace. Thus, environmental friendliness of a petrochemical process and a product manufactured therefrom may be promoted.

Meanwhile, losses of hydrogen, which may leak from methane off-gas which is used in a downstream process of a naphtha cracking process or has its own independent marketability, may be minimized. Furthermore, efficiency of a naphtha cracking process itself is increased to make the most use of hydrogen which occurs or is produced as a byproduct in the process, thereby minimizing an amount of hydrogen which is further imported from the outside, which reduces costs during manufacture of a cracking furnace fuel.

### [Brief Description of Drawings]

FIG. 1 is a process flow diagram of a method for preparing fuel of cracking furnace according to an exemplary embodiment of the present invention.
FIGS. 2 and 3 are process flow diagrams of methods for preparing fuel of cracking furnace according to the comparative examples which are contrasted with the examples of the present invention.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

In the present invention, the term "stream" may refer to a fluid flow in a process, or may refer to a fluid itself flowing in a pipe. Specifically, the "stream" may refer to both a fluid itself flowing in a pipe connecting each device and a fluid flow. In addition, the fluid may refer to a gas or a liquid.

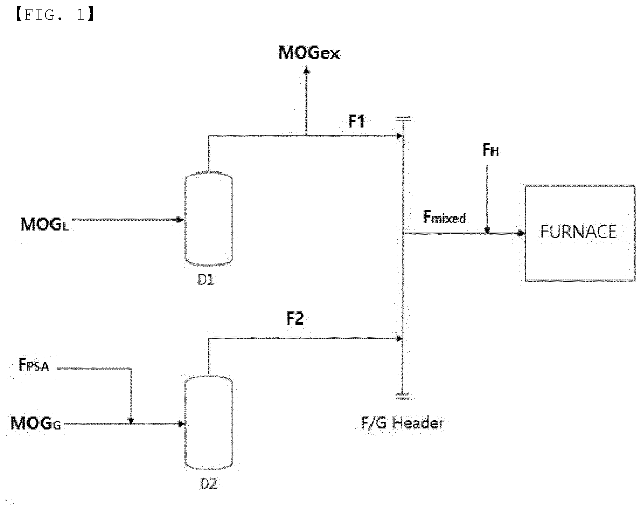

Hereinafter, the present invention will be described in more detail for better understanding of the present invention, with reference to FIG. 1.

A method for preparing fuel for cracking furnace according to an exemplary embodiment of the present invention may include preparing a first methane off-gas stream (MOG_{L}) derived from a liquid cracking furnace and a second methane off-gas stream (MOG_{G}) derived from a gaseous cracking furnace.

The liquid cracking furnace may be a cracking furnace in which a liquid feedstock is supplied and thermally cracked. A gaseous cracking furnace is a cracking furnace in which a gaseous feedstock is supplied and thermally cracked. Meanwhile, a thermal cracking process carried out in the liquid cracking furnace and the gaseous cracking furnace is a process for obtaining a thermal cracking product from a feedstock, and may be carried out separately in a liquid cracking furnace and a gaseous cracking furnace, depending on the phase of a feedstock.

That is, in order to increase the production of a product such as ethylene, the thermal cracking process according to an exemplary embodiment of the present invention may be performed separately by a thermal cracking process of a gas phase material using a hydrocarbon compound having 2 to 4 carbon atoms such as ethane and propane as a feedstock, in addition to a thermal cracking process of a liquid phase material using naphtha as a feedstock.

Specifically, the feedstock supplied to the liquid cracking furnace may include a mixture of hydrocarbon compounds supplied in a liquid form. As a specific example, it may be a feedstock including naphtha, and as a more specific example, it may be naphtha. The naphtha may be derived from a fraction of gasoline obtained in a distillation apparatus of crude oil.

The thermal cracking temperature of the liquid cracking furnace may be 500°C to 1,000°C, 750°C to 875°C, or 800°C to 850°C, and within the range, the thermal cracking yield of the feedstock supplied to the liquid cracking furnace is excellent.

In addition, the gaseous cracking furnace may be a cracking furnace for thermally cracking a feedstock supplied in a gas phase. The feedstock of the gaseous cracking furnace may be a gaseous raw material including a hydrocarbon compound having 2 to 4 carbon atoms. Herein, the hydrocarbon compound having 2 to 4 carbon atoms may include one or more selected from the group consisting of recirculating C2 and recirculating C3 hydrocarbon compounds, propane, and butane, which are separated from a subsequent process and circulated.

Meanwhile, the gaseous cracking furnace may be one type of gaseous cracking furnace, and according to an exemplary embodiment of the present invention, two or more types of gaseous cracking furnaces may be used depending on gaseous raw materials supplied in a gas phase. That is, the gaseous cracking furnace may include a first gaseous cracking furnace for thermally cracking recirculating C2 and C3 hydrocarbon compounds, and a second gaseous cracking furnace for thermally cracking one or more of propane and butane, which are further supplied separately from the recirculating C2 and C3 hydrocarbon compounds, according to the feedstock. The first and second gaseous cracking furnaces may be connected in parallel with each other.

The recirculating C2 hydrocarbon compound and the recirculating C3 hydrocarbon compound which are supplied to the first gaseous cracking furnace may be a C2 hydrocarbon compound and a C3 hydrocarbon compound which are recirculated after refinement in a subsequent refining process. Specifically, the recirculating C2 hydrocarbon compound may be ethane which is recirculated after refinement in a refinement step (S4) described later, and the recirculating C3 hydrocarbon compound may be propane which is recirculated after refinement in a refinement step (S4) described later.

The feedstock supplied to the second gaseous cracking furnace is a hydrocarbon compound having 2 to 4 carbon atoms which is supplied separately from the recirculating C2 hydrocarbon compound and the C3 hydrocarbon compound, and may include one or more selected from the group consisting of propane and butane, and more specifically, may be derived from liquefied petroleum gas (LPG). Meanwhile, the liquefied petroleum gas may be vaporized and supplied to the second gaseous cracking furnace. Since the cost of a raw material supplied to the second gaseous cracking furnace is relatively low, it is easy to supply a raw material from the outside, and thus, the production of a thermal cracking product is increased while reducing the cost of production.

The thermal cracking temperature of the gaseous cracking furnace may be 500°C to 1,000°C, 750°C to 900 °C, or 825 °C to 875 °C, and within the range, the thermal cracking yield of the feedstock supplied to the gaseous cracking furnace is excellent.

The first and second methane off-gas streams (MOG_{L}, MOG_{G}) according to an exemplary embodiment of the present invention may be derived from the liquid cracking furnace and the gaseous cracking furnace, respectively.

Specifically, the first and second methane off-gas streams (MOG_{L}, MOG_{G}) may be prepared by a process including: supplying the feedstock described above to each cracking furnace and performing thermal cracking (S1), cooling thermal cracking gas which is thermally cracked and includes hydrogen and C1, C2, C3, and higher hydrocarbon compounds in a cooling tower (S2), compressing the cooled thermal cracking gas in two or more compressors (S3), and refining the compressed thermal cracking gas (S4).

That is, the first methane off-gas stream (MOG_{L}) derived from the liquid cracking furnace may be a stream prepared by supplying a liquid feedstock to the liquid cracking furnace and then performing steps S1 to S4, and the second methane off-gas stream (MOG_{G}) derived from the gaseous cracking furnace may be a stream prepared by supplying a gaseous feedstock to the gaseous cracking furnace and then performing steps S1 to S4. In addition, the steps S1 to S4 for preparing the first and second methane off-gas streams (MOG_{L}, MOG_{G}) may be performed through each of separate lines.

Meanwhile, according to an exemplary embodiment of the present invention, a step of obtaining the first and second methane off-gas streams (MOG_{L}, MOG_{G}) by the step of refining the compressed thermal cracking gas (S4) may be performed by a device including a demethanizer and a cooling circulation zone (cold box, CB).

Specifically, the compressed thermal cracking gas may be supplied to a demethanizer, and optionally, when the compressed thermal cracking gas passes through a gas-liquid separator, a lower discharge stream from the gas-liquid separator may be supplied to a demethanizer. The demethanizer is a device for separating an upper discharge stream including hydrogen and a C1 hydrocarbon compound and a lower discharge stream including a C2 hydrocarbon compound by distilling the compressed thermal cracking gas including hydrogen, a C1 hydrocarbon compound, and a C2 hydrocarbon compound.

Subsequently, an upper discharge stream of the demethanizer including hydrogen and a C1 hydrocarbon compound, or optionally, when the gas-liquid separator is operated, an upper discharge stream of the gas-liquid separator and an upper discharge stream of the demethanizer may be supplied to a cooling circulation zone and circulated. Thus, a hydrogen-rich stream and a methane-rich stream may be separated and produced.

Herein, the first and second methane off-gas streams (MOG_{L}, MOG_{G}) may be methane-rich streams produced as a result of separation and refining processes by a demethanizer and a cooling circulation zone performed in each line.

Meanwhile, according to an exemplary embodiment of the present invention, a hydrogen content in the first methane off-gas stream (MOG_{L}) may be 10 vol% to 25 vol%, and a methane content may be 75 vol% to 90 vol%. In addition, as remaining components, for example, 0.1 vol% or less of carbon monoxide, 0.3 vol% or less of ethylene, and 0.002 vol% or less of ethane, may be included.

A hydrogen content in the second methane off-gas stream (MOG_{G}) may be 67 vol% to 77 vol%, and a methane content may be 23 vol% to 33 vol%. In addition, as remaining components, 0.05 vol% or less of carbon monoxide and 0.1 vol% or less of ethylene, may be included.

The hydrogen content included in the second methane off-gas stream (MOG_{G}) derived from the discharge stream from the gaseous cracking furnace is higher than the hydrogen content included in the first methane off-gas stream (MOG_{L}) derived from the discharge stream from the liquid cracking furnace. This is because when ethane and propane which are the raw materials of the gaseous cracking furnace are thermally cracked, the hydrogen content in the discharge stream from the cracking furnace itself is high, as compared with the case in which naphtha which is a raw material of the liquid cracking furnace is thermally cracked, and since a refining process of obtaining methane off-gas from the discharge stream from the gaseous cracking furnace is relatively simple, most of hydrogen in the discharge stream from the gaseous cracking furnace may be included in the methane off-gas stream (MOG_{G}). In addition, in the case of a refining process involved in the discharge stream from the cracking furnace, in order to minimize a leakage of the C2 hydrocarbon compound to the upper portion of the demethanizer, a condensation process using a cryogenic ethylene refrigerant to the upper discharge stream from the demethanizer is involved, and since a condensation temperature during a condensation process related to a liquid cracking furnace is lower than a condensation temperature during a condensation process related to a gaseous cracking furnace, the hydrogen content included in the first methane off-gas stream (MOG_{L}) is lower than the hydrogen content included in the second methane off-gas stream (MOG_{G}).

Since methane off-gas derived from a cracking furnace usually includes a large amount of methane, it may be used as a furnace fuel. That is, since the methane off-gas has economic feasibility itself, it may be recirculated and used as a fuel for a furnace installed in a naphtha process, for example, a cracking furnace, or may be discharged to the outside of the system of the naphtha process and sold. However, when the methane off-gas is recirculated and used as the fuel for the cracking furnace, environmental pollution may be caused or constraints by environmental regulations may result due to carbon dioxide produced and discharged by combustion of hydrocarbon compounds included in the methane off-gas. In addition, as described above, the methane off-gas include a certain amount of hydrogen, and when the methane off-gas is discharged out of the system and sold, even hydrogen included in the methane off-gas on sale is exported out of the system, thereby causing a leak of hydrogen. Since hydrogen does not produce carbon dioxide by combustion and has a relatively high burning value, it has a high utility value in terms of economic and environmental aspects. Therefore, from an economic point of view, process efficiency needs to be improved in order to minimize a leakage of hydrogen included in methane off-gas, and also minimize supply of hydrogen imported from the outside, and eventually, it is necessary to increase a hydrogen content in a cracking furnace fuel from the point of view of environmental issues.

From these points of view, the method for preparing fuel of cracking furnace according to an exemplary embodiment of the present invention may include, for the first and second methane off-gas streams prepared as described above, diverging a portion of the first methane off-gas stream into a methane off-gas export stream and obtaining a first fuel gas stream (F1) from the remaining stream.

As described above, the second methane off-gas stream (MOG_{G}) derived from the gaseous cracking furnace has a higher hydrogen content than the first methane off-gas stream (MOG_{L}) derived from the liquid cracking furnace, but a flow rate of the first methane off-gas stream (MOG_{L}) is higher than the second methane off-gas stream (MOG_{G}). Specifically, a mass flow rate of the first methane off-gas stream (MOG_{L}) may be 3 to 10 times a mass flow rate of the second methane off-gas stream (MOG_{G}). This may be controlled by an import amount of raw materials imported into the liquid cracking furnace and the gaseous cracking furnace, and in the economic point of view of utilization and process operation of naphtha which is usually a main raw material, operation at the mass flow ratio described above is preferred.

Therefore, it is preferred to diverge a portion of the first methane off-gas stream (MOG_{L}) which has a lower hydrogen content but a higher flow rate than the second methane off-gas stream (MOG_{G}) and export methane off-gas, in terms of minimizing the leakage of hydrogen without a large change in the flow rate of methane off-gas produced. The flow rate of the methane off-gas export stream may be increased as the flow rate of a hydrogen gas stream (F_{H}) imported from the outside is increased. Meanwhile, the hydrogen content in the methane off-gas export stream (MOGex) may be 15 vol% to 25 vol%.

The first methane off-gas stream (MOG_{L}) may be supplied to a drum (D1) and discharged from the drum (D1) after removing liquid hydrocarbon. A portion of the first methane off-gas stream (MOG_{L}) discharged from the drum (D1) is diverged and exported as a methane off-gas export stream (MOGex) and the first fuel gas stream (F1) may be obtained from the rest of the stream. The first fuel gas stream (F1) and the second fuel gas stream (F2) may be mixed in a header. That is, the methane off-gas export stream (MOGex) may refer to a stream which is diverged from the first methane off-gas stream (MOG_{L}) and exported, before mixing the first fuel gas stream (F1) with the second fuel gas stream (F2).

According to an exemplary embodiment of the present invention, since the second methane off-gas stream (MOG_{G}) has a higher hydrogen content than the first methane off-gas stream (MOG_{L}) , the second methane off-gas stream (MOG_{G}) may be the second fuel gas stream (F2) which is mixed with the first fuel gas stream (F1) to form a mixed fuel gas stream (F_{mixed}). Thus, in the present invention, when hydrogen (F_{H}) imported to the cracking furnace from the outside for reducing carbon dioxide which may occur during combustion of the cracking furnace fuel is included, a point at which the methane off-gas export stream (MOGex) diverges is limited to a stream having a relatively high content of methane, thereby minimizing a hydrogen leakage to the outside and maximizing economic feasibility.

Meanwhile, according to another exemplary embodiment of the present invention, the second methane off-gas stream (MOG_{G}) may be mixed with a recirculating hydrogen gas stream to form the second fuel gas stream (F2). Herein, the recirculating hydrogen gas stream is a stream which is separated and circulated in a subsequent process in the system and is rich in hydrogen, and a hydrogen content in the recirculating hydrogen gas stream may be higher than a hydrogen content in the second methane off-gas stream. Thus, the hydrogen content in the cracking furnace fuel may be further increased while decreasing the flow rate of the hydrogen gas stream (F_{H}) imported from the outside.

More specifically, the recirculating hydrogen gas stream may be a reject gas by a pressure swing adsorption process. That is, the second methane off-gas stream (MOG_{G}) is mixed with the reject gas (F_{PSA}) by the pressure swing adsorption process to form the second fuel gas stream (F2).

The pressure swing adsorption process is a process which is involved in the thermal cracking process of naphtha and is performed for obtaining high-purity hydrogen stream, and the reject gas (F_{PSA}) of the pressure swing adsorption (PSA) process may refer to a low-purity hydrogen stream having a low hydrogen content other than the high-purity hydrogen stream obtained by the pressure swing adsorption (PSA) process.

An influent imported to the pressure swing adsorption process, or an upstream process or downstream process of the pressure swing adsorption process is not particularly limited. For example, a hydrogen-rich stream may be imported to the pressure swing adsorption process as a stream which is discharged from the cooling circulation zone, a high-purity hydrogen stream may be produced by the pressure swing adsorption process, and the rest of the stream may be discharged as the reject gas (F_{PSA}) of the pressure swing adsorption (PSA) process.

The reject gas (F_{PSA}) is a gas discharged through the pressure swing adsorption (PSA) process, and a hydrogen content in the reject gas may be 60 vol% to 80 vol%, specifically 70 vol% to 80 vol%. Meanwhile, a methane content in the reject gas may be 20 vol% to 40 vol%, or 20 vol% to 30 vol%.

That is, since the reject gas of the pressure swing adsorption (PSA) process may have a higher hydrogen content than that included in the first and second methane off-gas streams, when the reject gas of the pressure swing adsorption process is used as the cracking furnace fuel, an amount of carbon dioxide emitted during combustion may be decreased. Further, considering that the reject gas rather than the high-purity hydrogen gas by the pressure swing adsorption (PSA) process is used, the overall economic feasibility of the process may be improved.

As described above, the reject gas of the pressure swing adsorption (PSA) process may be mixed with the second methane off-gas stream (MOG_{G}). As described above, since the first methane off-gas stream (MOG_{L}) has a relatively low hydrogen content, and a portion of the first methane off-gas stream (MOG_{L}) is diverged into the export stream and used in the production of methane off-gas, in order to manufacture a cracking furnace fuel having a high hydrogen content, it is preferred to mix the reject gas with the second methane off-gas stream (MOG_{G}) in terms of preventing a hydrogen leakage. From this point of view, the flow rate of the reject gas by the pressure swing adsorption process may be 5 wt% to 15 wt% of the flow rate of the second methane off-gas stream.

Meanwhile, the second methane off-gas stream (MOG_{G}) mixed with the reject gas of the pressure swing adsorption (PSA) process may be supplied to a drum (D2) and discharged from the drum (D2) after removing liquid hydrocarbon in the stream, thereby forming the second fuel gas stream (F2).

According to the method for preparing fuel of cracking furnace according to an exemplary embodiment of the present invention, mixing the first and second fuel gas streams (F1, F2) to prepare a mixed fuel gas stream (F_{mixed}) and mixing a hydrogen gas stream (F_{H}) with the mixed fuel gas stream (F_{mixed}) may be included.

That is, the first and second fuel gas streams (F1, F2) prepared by the process described above are mixed so that they are appropriate for supply to a cracking furnace fuel, thereby forming a mixed fuel gas stream (F_{mixed}) , and a hydrogen gas stream (F_{H}) is further mixed with the mixed fuel gas stream (F_{mixed}) in order to maintain the hydrogen content in the mixed fuel gas stream (F_{mixed}) to a desired level, thereby manufacturing a cracking furnace fuel.

First, it is preferred that the hydrogen content in the cracking furnace fuel is controlled to 50 vol% to 90 vol%. When the hydrogen content in the cracking furnace fuel is less than 50 vol%, the emission of carbon dioxide produced during combustion is increased, which is not preferred from the environmental point of view. In addition, when the hydrogen content in the cracking furnace is more than 90 vol%, the amount of a hydrogen gas stream (F_{H}) which should be added to the fuel is increased resulting in a negative impact to economic feasibility, and when the fuel is burned in a burner of a cracking furnace, safety problems due to back firing may arise, and an excessive amount of nitrogen oxides (NOx) is produced by burning, which is not preferred from the environmental point of view.

By adding the hydrogen gas stream (F_{H}) to the mixed fuel gas stream (F_{mixed}), the final hydrogen content in the cracking furnace fuel may be controlled to 50 vol% to 90 vol%.

Since a unit price per kg of the imported hydrogen gas stream (F_{H}) is generally higher than a unit price per kg of the methane off-gas stream exported from the first methane off-gas stream (MOG_{L}), it is important to minimize the flow rate of the hydrogen gas stream (F_{H}) which is further imported in controlling the hydrogen content in the cracking furnace fuel to a desired level. Therefore, according to the present invention, it is possible to minimize the flow rate of the hydrogen gas stream (F_{H}) which needs to be further imported for manufacturing a cracking furnace fuel having a desired hydrogen content, by mixing the recirculating hydrogen gas stream, for example, the reject gas by the pressure swing adsorption process with the second methane off-gas stream derived from the gaseous cracking furnace, and diverging the methane off-gas export stream for methane off-gas production from the first methane off-gas stream. Thus, an environmental friendly cracking furnace fuel may be economically manufactured.

Meanwhile, the fuel manufactured by the method for preparing fuel of cracking furnace of the present invention may be used as a fuel for one or more cracking furnaces of a liquid cracking furnace and a gaseous cracking furnace.

Hereinafter, the present invention will be described in more detail by the examples. However, the following examples are provided for illustrating the present invention, and it is apparent to a person skilled in the art that various modifications and alterations may be made without departing from the scope and spirit of the present invention and the scope of the present invention is not limited thereto.

### Examples and Comparative Examples

### Comparative Example 1

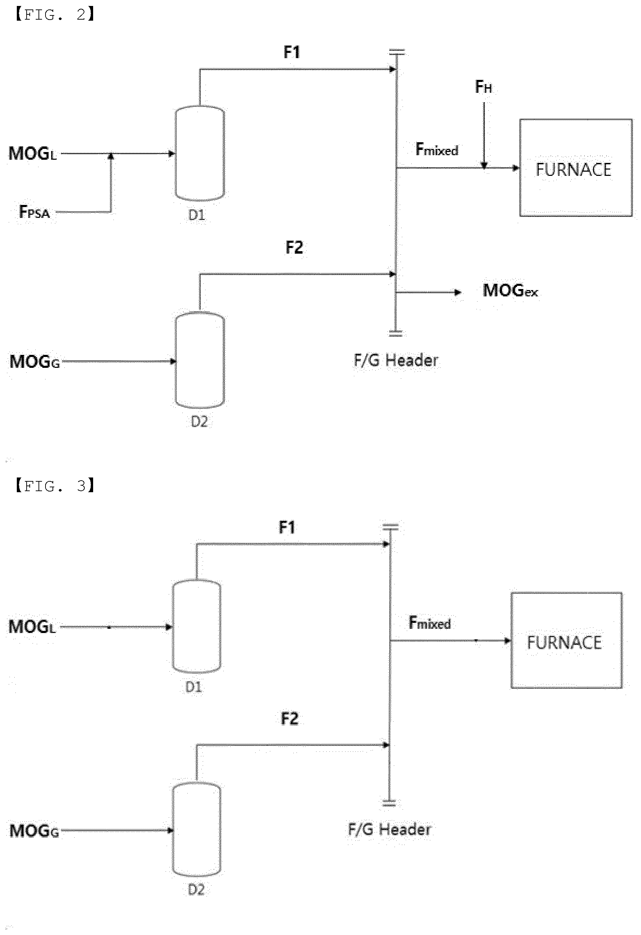

For the process flowchart illustrated in FIG. 3, the following process was simulated, using an Aspen Plus simulator from AspenTech.

First, naphtha was supplied to a liquid cracking furnace and thermally cracked, and then a thermal cracking product was sequentially cooled, compressed, and refined to prepare a first methane off-gas stream (MOG_{L}) having a hydrogen content of 18 vol%. At this time, the first methane off-gas stream (MOG_{L}) had a flow rate of 49.8 ton/hr. Meanwhile, after recirculating C2 and C3 hydrocarbon compounds and propane were supplied to a gaseous cracking furnace and thermally cracked, a thermal cracking product was sequentially cooled, compressed, and refined to prepare a second methane off-gas stream (MOG_{G}) having a hydrogen content of 67 vol%. At this time, the second methane off-gas stream (MOG_{G}) had a flow rate of 7.8 ton/hr.

The first and second methane off-gas streams prepared as such were used as first and second fuel gas streams (F1, F2), respectively without being mixed with the recirculating hydrogen gas stream. Thereafter, these were mixed to form a mixed fuel gas stream (F_{mixed}), which was used as a cracking furnace fuel without being mixed with a separate hydrogen gas stream. At this time, a hydrogen ratio in the cracking furnace fuel was 29.7 vol%.

### Example 1

For the process flowchart illustrated in FIG. 1, the process was simulated, using an Aspen Plus simulator from AspenTech.

The first methane off-gas stream (flow rate: 49.8 ton/hr; hydrogen content: 18 vol%) and the second methane off-gas stream (flow rate: 7.8 ton/hr; hydrogen content: 67 vol%) were prepared in the same manner as in Comparative Example 1.

Meanwhile, a stream discharged from a cooling circulation zone in the process of refining the thermal cracking product was subjected to a pressure swing adsorption (PSA) process, and as a result, a reject gas (F_{PSA}) was mixed with the second methane off-gas stream (MOG_{G}). The reject gas (F_{PSA}) had a hydrogen content of 77 vol% and a flow rate of 0.6 ton/hr.

The first methane off-gas stream (MOG_{L}) and the second methane off-gas stream (MOG_{G}) mixed with the reject gas were supplied to drums (D1, D2), respectively, and each stream was discharged at the same flow rate as the flow rate supplied to the drums (D1, D2).

A portion of the first methane off-gas stream (MOG_{L}) discharged from the drum (D1) was diverged into a methane off-gas export stream (MOGex) and the first fuel gas stream (F1) was obtained from the rest of the stream. At this time, the export stream (MOGex) had a hydrogen content of 18 vol% and a flow rate of 32.8 ton/hr, and the first fuel gas stream (F1) had a hydrogen content of 18 vol% and a flow rate of 17.0 ton/hr. Meanwhile, the second methane off-gas stream (MOG_{G}) mixed with the reject gas discharged from a drum (D2) was used as the second fuel gas stream (F2) (flow rate: 8.4 ton/hr).

Subsequently, the first and second fuel gas streams (F1, F2) were mixed to obtain a mixed fuel gas stream (F_{mixed}), and the mixed fuel gas stream (F_{mixed}) had a hydrogen content of 43 vol% and a flow rate of 25.4 ton/hr.

In order to adjust the hydrogen content in the mixed fuel gas stream (F_{mixed}) to 85 vol%, a 100% pure hydrogen gas stream (F_{H}) was mixed therewith at 14.2 ton/hr, thereby manufacturing a final cracking furnace fuel (hydrogen content: 85 vol%, flow rate: 39.6 ton/hr).

### Comparative Example 2

For the process flowchart illustrated in FIG. 2, the process was simulated, using an Aspen Plus simulator from AspenTech.

First and second methane off-gas streams (MOG_{L}, MOG_{G}) having the same hydrogen content and flow rate and a reject gas (hydrogen content: 77 vol%; flow rate: 0.6 ton/hr) was prepared in the same manner as in Example 1.

Thereafter, the reject gas was mixed with the first methane off-gas stream (MOG_{L}) rather than the second methane off-gas stream (MOG_{G}), and a methane off-gas export stream (MOGex) was diverged from a mixed fuel gas stream (F_{mixed}) of first and second fuel gas streams (F1, F2) rather than the first methane off-gas stream (MOG_{L}). At this time, the methane off-gas export stream (MOG_{L}) had a hydrogen content of 31 vol% and a flow rate of 33.7 ton/hr.

Meanwhile, the mixed fuel gas stream (F_{mixed}) according to Comparative Example 2 had a hydrogen content of 31 vol% and a flow rate of 24.5 ton/hr.

Other than that, the process was the same as in Example 1, and in order to adjust the hydrogen content in the mixed fuel gas stream (F_{mixed}) to 85 vol% like Example 1, a 100% pure hydrogen gas stream (F_{H}) was mixed therewith at 15.1 ton/hr, thereby manufacturing a final cracking furnace fuel (hydrogen content: 85 vol%, flow rate: 39.6 ton/hr).

### Examples 2 to 5

For the process flowchart illustrated in FIG. 1, the process was simulated, using an Aspen Plus simulator from AspenTech.

In Examples 2 to 5, in order to adjust the hydrogen contents in the cracking furnace fuel to those listed in Table 1, the cracking furnace fuels were manufactured in the same process flow as in Example 1, except that the import amounts of a hydrogen gas stream (F_{H}) and the discharge amounts of the methane off-gas export stream (MOGex) which is diverged and discharged from the first methane off-gas stream were controlled as shown in Table 1.

### Comparative Examples 3 to 6

For the process flowchart illustrated in FIG. 2, the process was simulated, using an Aspen Plus simulator from AspenTech.

In Comparative Examples 3 to 6, in order to adjust the hydrogen contents in the cracking furnace fuel to those listed in Table 2, the cracking furnace fuels were manufactured in the same process flow as in Comparative Example 2, except that the import amounts of a hydrogen gas stream (F_{H}) and the discharge amounts of the methane off-gas export stream (MOGex) which is diverged and discharged from the first methane off-gas stream were controlled as shown in Table 2.

In the following Tables 1 and 2, a carbon dioxide reduction refers to an amount reduced per year as compared with Comparative Example 1.

**[Table 1]**

| | Hydrogen gas stream (F_{H}) (ton/hr) | Hydrogen content in cracking furnace fuel (vol%) | Carbon dioxide reduction (kton/yr) | Flow rate of MOG export stream (ton/hr) | Hydrogen leakage by MOG export stream (kg/hr) |
|---|---|---|---|---|---|
| Example 1 | 14.21 | 85.0 | 741 | 32.81 | 892.8 |
| Example 2 | 11.86 | 80.0 | 618 | 27.39 | 745.4 |
| Example 3 | 8.14 | 70.0 | 424 | 18.79 | 511.3 |
| Example 4 | 5.31 | 60.0 | 277 | 12.27 | 333.9 |
| Example 5 | 3.10 | 50.0 | 161 | 7.15 | 194.6 |

**[Table 2]**

| | Hydrogen gas stream (F_{H}) (ton/hr) | Hydrogen content in cracking furnace fuel (vol%) | Carbon dioxide reduction (kton/yr) | Flow rate of MOG export stream (ton/hr) | Hydrogen leakage by MOG export stream (kg/hr) |
|---|---|---|---|---|---|
| Comparative Example 1 | - | 31.2 | - | - | - |
| Comparative Example 2 | 15.12 | 85.0 | 741 | 33.7 | 1804.9 |
| Comparative Example 3 | 12.62 | 80.0 | 618 | 28.2 | 1506.9 |
| Comparative Example 4 | 8.66 | 70.0 | 424 | 19.3 | 1033.8 |
| Comparative Example 5 | 5.65 | 60.0 | 277 | 12.6 | 675.0 |
| Comparative Example 6 | 3.30 | 50.0 | 161 | 7.35 | 393.5 |

From the results of Examples 1 to 5 and Comparative Examples 2 to 6, it was found that as the hydrogen content in the cracking furnace fuel was increased, an effect of reducing carbon dioxide emitting from the cracking furnace was increased.

In addition, in Examples 1 to 5 in which the reject gas by the recirculating hydrogen gas stream, specifically, the pressure swing adsorption process was mixed with the second methane off-gas stream derived from the gaseous cracking furnace and the methane off-gas (MOG) export stream was discharged from the first methane off-gas stream derived from the liquid cracking furnace, a decrease to about half or more the level of hydrogen leaking with the methane off-gas export stream was confirmed, and also, the flow rate of the hydrogen gas stream which should be further imported from the outside was also confirmed to be decreased, as compared with the comparative examples in which the process was not performed. That is, even when the same hydrogen content in the cracking furnace fuel was implemented, profitability improvement by a decrease in a hydrogen import amount which should be purchased from the outside was achieved in the examples of the present invention.

## Claims

1. A method for preparing fuel of cracking furnace, the method comprising:
preparing a first methane off-gas stream derived from a liquid cracking furnace and a second methane off-gas stream derived from a gaseous cracking furnace,
diverging a portion of the first methane off-gas stream into a methane off-gas export stream and obtaining a first fuel gas stream from the rest,
obtaining a second fuel gas stream from the second methane off-gas stream,
mixing the first fuel gas stream and the second fuel gas streams to prepare a mixed fuel gas stream, and
mixing a hydrogen gas stream with the mixed fuel gas stream.

2. The method for preparing fuel of cracking furnace of claim 1,
wherein a feedstock of the liquid cracking furnace includes naphtha, and
a feedstock of the gaseous cracking furnace includes a hydrocarbon compound having 2 to 4 carbon atoms.

3. The method for preparing fuel of cracking furnace of claim 2, wherein the hydrocarbon compound having 2 to 4 carbon atoms which is the feedstock of the gaseous cracking furnace includes one or more selected from the group consisting of a recirculating C2 hydrocarbon compound, a recirculating C3 hydrocarbon compound, propane, and butane.

4. The method for preparing fuel of cracking furnace of claim 1,
wherein a hydrogen content in the first methane off-gas stream is 10 vol% to 20 vol%, and
a hydrogen content in the second methane off-gas stream is 67 vol% to 77 vol%.

5. The method for preparing fuel of cracking furnace of claim 1,
wherein the second fuel gas stream is a mixture of the second methane off-gas stream with a recirculating hydrogen gas stream, and
a hydrogen content in the recirculating hydrogen gas stream is higher than a hydrogen content in the second methane off-gas stream.

6. The method for preparing fuel of cracking furnace of claim 5, wherein the recirculating hydrogen gas stream is a reject gas by a pressure swing adsorption process.

7. The method for preparing fuel of cracking furnace of claim 6, wherein a flow rate of the reject gas by the pressure swing adsorption process is 5 wt% to 15 wt% of a flow rate to the second methane off-gas stream.

8. The method for preparing fuel of cracking furnace of claim 1, wherein a hydrogen content in the methane off-gas export stream is 15 vol% to 25 vol%.

9. The method for preparing fuel of cracking furnace of claim 1, wherein a hydrogen content in cracking furnace fuel is 50 vol% to 90 vol%.

10. The method for preparing fuel of cracking furnace of claim 1,
wherein the gaseous cracking furnace includes first and second gaseous cracking furnaces, and
the second methane off-gas stream is derived from a mixed stream of discharge streams from the first and second gaseous cracking furnace.

11. The method for preparing fuel of cracking furnace of claim 1, wherein the first and second methane off-gas stream is prepared by a process including:
supplying a feedstock to the liquid cracking furnace or the gaseous cracking furnace and thermally cracking the feedstock,
cooling thermal cracking gas including hydrogen, C1, C2, and C3 or higher hyrocarbon compounds as a thermal cracking product in a cooling tower;
compressing the cooled thermal cracking gas in a compressor; and
refining the compressed thermal cracking gas included in a stream discharged from the compressor.

12. A naphtha cracking process which uses the fuel of cracking furnace prepared by claim 1 as a fuel of one or more cracking furnaces of a liquid cracking furnace and a gaseous cracking furnace.
